# EUROPÄISCHE PATENTANMELDUNG

(11) **EP 1 813 781 A1**
(43) Veröffentlichungstag der Anmeldung: **01.08.2007**
(21) Anmeldenummer: 06001997.3
(22) Anmeldetag: 31.01.2006
(51) Int. Cl.: F01D 25/12, F01D 5/18, F23R 3/00

(54) **Bauteil einer Turbine, Turbine und Verfahren zum Betrieb einer Turbine**

(71) Anmelder: SIEMENS AKTIENGESELLSCHAFT, 80333 München (DE)
(72) Erfinder: Beul, Ulrich, 59457 Werl (DE); Bison, Patrick, 45481 Mülheim a.d. Ruhr (DE); Ceric, Hajrudin, 46045 Oberhausen (DE); David, Walter, 45481 Mülheim an der Ruhr (DE); Deidewig, Frank Dr., 45149 Essen (DE); Heue, Matthias, 44879 Bochum (DE); Hofbauer, Thomas Dr., 73666 Baltmannsweiler (DE); Buituron, Juan Marquez, 45470 Mülheim an der Ruhr (DE); Peters, Karsten, 45485 Wesel (DE); Richter, Christoph Dr., 45485 Wesel (DE); Skreba, Steffen Dr., 45149 Essen (DE)

(57) **Zusammenfassung**

Bauteil (16) einer Turbine (6), insbesondere einer Dampfturbine, das im Betrieb der Turbine (6) mit einem Heißmedium beaufschlagt ist und eine Thermo-Isolierschicht (20) aufweist. Die Thermo-Isolierschicht (20) umfasst einen Latentwärmespeicher (24) zum Speichern von Wärme (Q) durch Änderung seines Aggregatzustandes, so dass die thermischen Spannungen im Bauteil (16) reduziert werden, was ein schnelleres Anfahren der Turbine (6) ermöglicht.

## Beschreibung

Die Erfindung betrifft ein Bauteil einer Turbine, insbesondere einer Dampfturbine, die im Betrieb der Turbine mit einem Heißmedium beaufschlagt ist und eine Thermo-Isolierschicht aufweist. Weiterhin betrifft die Erfindung eine Turbine und ein Verfahren zum Betrieb dieser Turbine.

Dampfturbinen werden allgemein verwendet, um elektrische Generatoren in Kraftwerken anzutreiben. Dampfturbinen müssen auf kontrollierte Weise angefahren werden, um die vielen Bauteile der Turbine vor Beschädigungen durch zu hohe Spannungen im Material oder vor unzulässig hohe Verformungen zu schützen, die aus einer plötzlichen Beaufschlagung mit hohen Temperaturgradienten und Drücken folgen können.

Insbesondere in dickwandigen Bauteilen von Dampfturbinen treten beim schnellen Anfahren der Turbinen Temperaturdifferenzen auf, welche zu thermischem Spannungen im Material der Bauteile führen. Diese thermischen Spannungen haben einen wesentlichen Einfluss auf die Anfahrzeit der Dampfturbinen, da aufgrund der Spannungen nur ein langsames Anfahren möglich ist.

Ein System zum Reduzieren der thermischen Spannungen in einer Dampfturbine geht beispielsweise aus der US 5,498,131 hervor. Im Rotorkern der Turbinenwelle sind radiale Kanäle zum Zuführen und Abführen von Dampf vorgesehen, welcher Dampf das Innere des Rotorkerns erwärmt.

Der Erfindung liegt die Aufgabe zugrunde, ein Bauteil einer Turbine anzugeben, das gegen hohe Temperaturdifferenzen beständig ist und ein schnelles Anfahren und Abfahren der Turbine erlaubt. Ferner liegt der Erfindung die Aufgabe zugrunde, eine Turbine mit mindestens einem solchen Bauteil anzugeben. Eine weitere Aufgabe ist die Angabe eines Verfahrens zum Betrieb einer Turbine.

Die erstgenannte Aufgabe wird erfindungsgemäß gelöst durch ein Bauteil einer Turbine, insbesondere einer Dampfturbine, das im Betrieb der Turbine mit einem Heißmedium beaufschlagt ist und eine Thermo-Isolierschicht aufweist, wobei die Thermo-Isolierschicht einen Latentwärmespeicher zum Speichern von Wärme durch Änderung seines Aggregatzustandes umfasst.

Latentwärmespeicher speichern die thermische Energie durch die Änderung ihres Aggregatzustandes. Moderne Speichermedien (phase change materials) für Latentwärmespeicher sind auf Salz- oder Paraffinbasis und sind in nahezu allen Temperaturbereichen einsetzbar. Latentwärmespeicher werden z.B. als Warmhalteplatten in der Gastronomie, als temperaturpuffernde Baustoffe in der Heizung- und Baustoffindustrie oder in Kraftfahrzeugen zum Abspeichern von überschüssiger Motorwärme, um sie beim Kaltstart wieder frei zu setzen, verwendet.

Bei Latentwärmespeicher nutzt man gegenüber konventionellen Isolierstoffen den Vorteil aus, dass sie während der Phasenumwandlung zusätzliche Energie benötigen, ohne dass sich ihre Temperatur ändert, und so den Temperaturanstieg im zu isolierenden Bauteil verzögern. Somit treten im Bauteil kleinere Temperaturdifferenzen auf bzw. bei gleichen Temperaturdifferenzen wie bei einem unisolierten Bauteil kann die Heißdampftemperatur schneller gesteigert werden. Hierdurch ist ein schnelleres Anfahren der Turbine möglich.

Beim Abfahren der Turbine wird die Dampfzufuhr unterbrochen, so dass die Turbine abkühlt und dadurch die Aggregatzustandsänderung rückgängig gemacht wird und der Latentwärmespeicher bereit ist zum nächsten Anfahren.

Ein entscheidender Vorteil der Latentwärmespeicher besteht darin, dass sie zur Wärmeisolation sowohl der stationären (Innengehäuse, Leitschaufeln) als auch der beweglichen (Welle, Laufschaufeln) Bauteile der Turbine verwendet werden können. Latentwärmespeicher können direkt an der Oberfläche der Bauteile angebracht werden. Alternativ können Latentwärmespeicher in den Bauteilen eingeschlossen und vor dem Heißmedium abgeschirmt werden.

Bevorzugt ist der Latentwärmespeicher im Betrieb der Turbine im flüssigen Aggregatzustand. Dies bedeutet, dass beim Beaufschlagen mit hoher Temperatur eine Phasenumwandlung des Latentwärmespeichers vom festen zum flüssigen Aggregatzustand stattfindet. Diese Aggregatzustandsänderung erfordert sehr viel Energie, wobei sich die Temperatur des Latentwärmespeichers während der Phasenumwandlung nicht ändert, so dass nur eine langsame Erhöhung der Temperatur im Bauteil erfolgt.

Gemäß einer bevorzugten Ausgestaltung liegt die Schmelztemperatur des Latentwärmespeichers im Bereich zwischen 400°C und 500°C. Die Schmelztemperatur des Latentwärmespeichers und die beim Anfahren der Turbine auftretende Temperatur sind aufeinander abgestimmt, so dass der Latentwärmespeicher die Wärme während des Anfahrens aufnehmen und die Temperaturdifferenz im Bauteil gering halten kann.

Bevorzugt besteht der Latentwärmespeicher aus mehreren Speichermedien, die unterschiedliche Schmelztemperaturen aufweisen. Die Schmelztemperaturen der Speichermedien sind an den Temperaturverlauf beim Anfahren der Turbine angepasst, so dass eine graduelle Aufnahme der Wärme vom Latentwärmespeicher erfolgt. Hierbei kann ein Teil der Wärme bereits bei niedrigeren Temperaturen des Heißmediums, insbesondere bei Temperaturen unter 400°C, aufgenommen werden. Die anderen Speichermedien "aktivieren" sich erst später. Das Speichermedium mit dem höchsten Schmelzpunkt verflüssigt sich, wenn das Heißmedium etwa seine Maximaltemperatur erreicht hat. Hierbei können die Speichermedien z.B. schichtweise übereinander oder benachbart in dafür vorgesehenen Kammern angeordnet sein. Die unterschiedlichen Bauteile einer Turbine umfassen in Abhängigkeit von der Temperatur, der sie ausgesetzt sind, bevorzugt unterschiedliche Latentwärmespeicher, die sich bei unterschiedlichen Temperaturen verflüssigen. So weisen Bauteile im Einströmbereich der Turbine eine bessere Wärmedämmung als Bauteile im Ausströmbereich auf.

Damit die Aufnahmefähigkeit des Latentwärmespeichers den lokalen Temperaturanforderungen in einem bestimmten Bereich der Turbine genügt, ist die Thermo-Isolierschicht bevorzugt in verschiedenen Bereichen der Turbine unterschiedlich dick.

Vorteilhafterweise ist der Latentwärmespeicher durch eine wärmeleitende Abschirmschicht vor dem Heißmedium abgeschirmt. Diese wärmeleitende Abschirmschicht kann beispielsweise eine Stahlschicht oder ein anderes der Umgebung widerstehendes Material sein. Die Abschirmschicht ist in der Lage, die Wärme vom Heißmedium zum Latentwärmespeicher durchzuleiten. Gleichzeitig deckt die Abschirmschicht den Latentwärmespeicher vollständig ab, so dass er in seiner flüssigen Phase nicht herausfließen kann.

Weiterhin von Vorteil ist, dass der Latentwärmespeicher in Kammern eingeschlossen ist, so dass er im flüssigen Zustand in einem geschlossenen Raum festgehalten ist. Insbesondere sind diese Kammern vollständig mit dem Latentwärmespeicher aufgefüllt. Die Kammern sind nahe an der Oberfläche des Bauteils angebracht, so dass eine effektive Isolation gewährleistet ist. Die Kammern weisen z.B. eine Tropfenform auf oder sind als Ausnehmungen, Taschen oder Netze im Grundwerkstoff ausgebildet, wobei sie eine möglichst große Fläche abdecken. Die Kammern sind ferner derart ausgebildet, dass sie keine negative Beeinflussung der Festigkeitseigenschaften des Bauteils verursachen.

Gemäß einer weiteren vorteilhaften Ausgestaltung umfasst die Isolierschicht ein Trägermaterial, in dem der Latentwärmespeicher in Form von Makroelementen eingeschlossen ist. Diese Ausgestaltung verhindert ebenfalls ein Herauslaufen des flüssigen Latentwärmespeichers. Der Latentwärmespeicher ist mit dem Trägermaterial vermischt und bildet im festen Zustand Körnchen im Trägermaterial. Diese Körnchen verwandeln sich beim Verflüssigen des Latentwärmespeichers in Tropfen, die weiterhin im festen Trägermaterial eingeschlossen bleiben.

Die zweitgenannte Aufgabe wird erfindungsgemäß gelöst durch eine Turbine, die mindestens ein Bauteil gemäß den vorhergehenden Ausführungsformen umfasst.

Die weitere Aufgabe wird erfindungsgemäß gelöst durch ein Verfahren zum Betrieb einer solchen Turbine.

Die im Hinblick auf das Bauteil aufgeführten Vorteile und bevorzugten Ausführungsformen lassen sich sinngemäß auf die Turbine und auf das Verfahren zum Betrieb einer Turbine übertragen.

Ausführungsbeispiele der Erfindung werden nachfolgend anhand einer Zeichnung näher erläutert. Es zeigen hierbei schematisch:
- FIG 1: eine Dampfturbinenanlage,
- FIG 2A: einen Ausschnitt eines Bauteils mit einer Thermo-Isolierschicht die einen Latentwärmespeicher enthält,
- FIG 2B: eine Vergrößerung eines Ausschnitts der Thermo-Isolierschicht gemäß FIG 2A,
- FIG 3: einen Ausschnitt eines Bauteils mit einer Thermo-Isolierschicht, die in Kammern unterteilt ist,
- FIG 4: einen Ausschnitt eines Bauteils mit einer Thermo-Isolierschicht, die aus mehreren Schichten besteht, und
- FIG 5: ein Diagramm in dem die Wirkung einer Thermo-Isolierschicht mit der eines konventionellen Isolierstoffes verglichen ist.

Gleiche Bezugszeichen haben in den verschiedenen Figuren die gleiche Bedeutung.

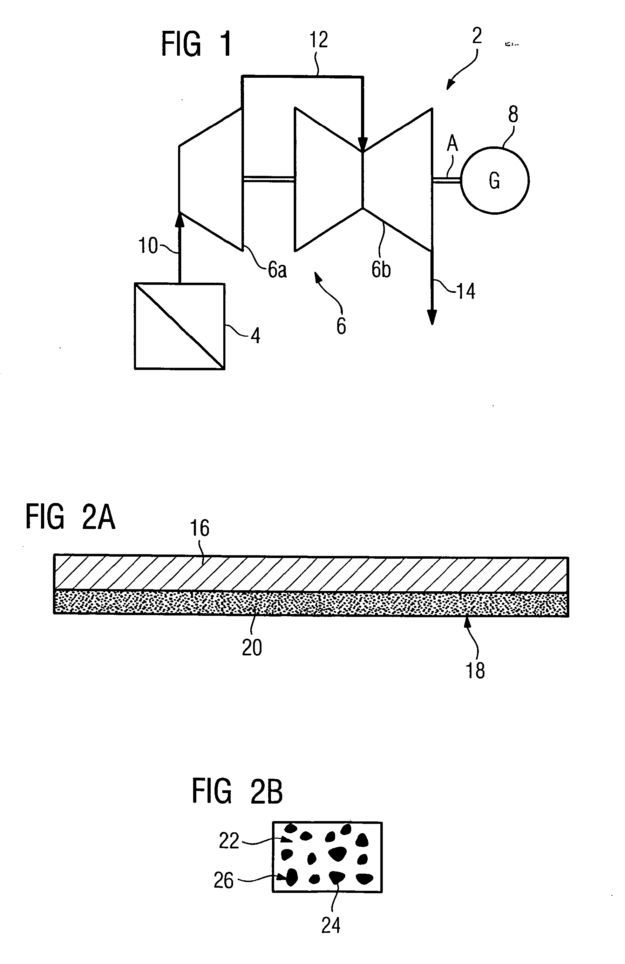

Eine vereinfachte Darstellung einer Dampfturbinenanlage 2 ist aus FIG 1 zu entnehmen. Die Dampfturbinenanlage 2 umfasst einen Dampferzeuger 4, eine Dampfturbine 6 mit einem Hochdruckteil 6a und einem Mitteldruck/Niederdruckteil 6b und einen Generator 8 zum Erzeugen elektrischer Energie. Die Dampfturbine 6 und der Generator 8 sind an derselben Drehachse A angeordnet. Im Dampferzeuger 4 wird Heißdampf erzeugt, der über eine Zuführleitung 10 dem Hochdruckteil 6a der Dampfturbine 6 zugeführt wird. Nach dem Durchströmen des Hochdruckteils 6a wird der Dampf, der Arbeit geleistet hat und dadurch seine Enthalpie bzw. Temperatur reduziert wurde, über eine interne Leitung 12 dem Mitteldruck/Niederdruckteil 6b zugeführt. Der kühlere und entspannte Dampf wird über die Abführleitung 14 aus dem Mitteldruck/Niederdruckteil abgeführt.

FIG 2A zeigt einen Ausschnitt eines Bauteils 16 der Dampfturbine 6, dessen eine Seite 18 im Betrieb der Turbine 6 hoher Temperatur ausgesetzt ist und mit einer Thermo-Isolierschicht 20 beschichtet ist. Das Bauteil 16 ist in diesem Ausführungsbeispiel ein Außengehäuse der Dampfturbine 6, dessen Innenseite 18 beim Anfahren und Betrieb der Turbine 6 mit Heißdampf beaufschlagt wird.

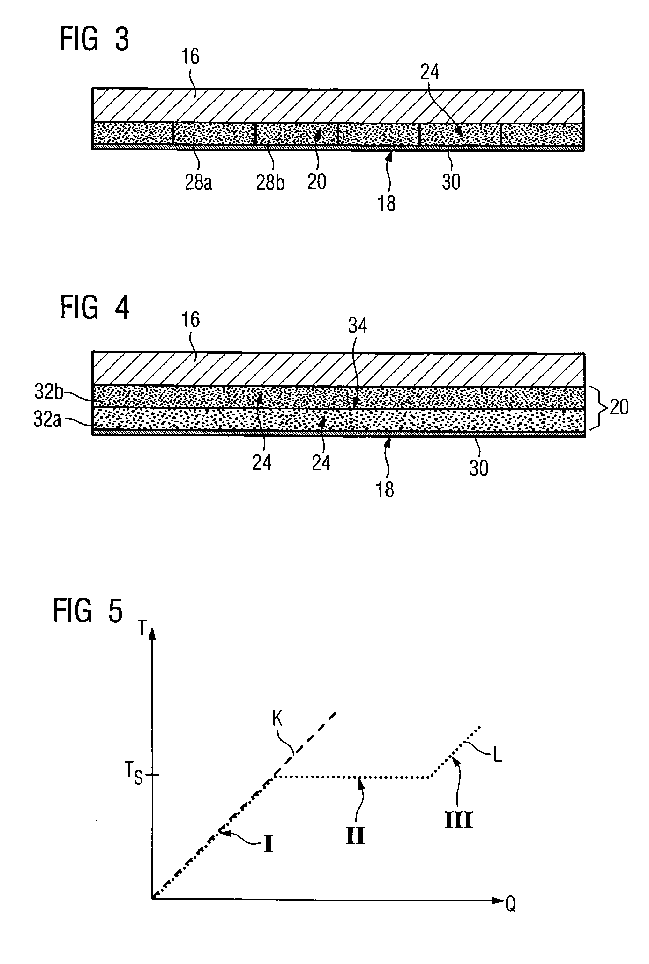

Der genaue Aufbau der Thermo-Isolierschicht 20 ist in FIG 2B dargestellt. Die Thermo-Isolierschicht 20 besteht in diesem Ausführungsbeispiel aus einem Trägermaterial 22, in dem ein Latentwärmespeicher 24 in Form von Makroelementen 26 eingeschlossen ist. Die Makroelemente 26 stellen im festen Zustand Körnchen dar, die mit dem Trägermaterial 22 vermischt sind. Beim Aufheizen der Innenseite 18 wird die dem Bauteil 16 zugeführte Wärme Q (vgl. FIG 5) von den Körnchen 26 aufgenommen und sie schmelzen auf. Während dieser Phasenumwandlung wird die zugeführte Wärme Q vom Latentwärmespeicher 24 absorbiert, ohne dass seine Temperatur ansteigt. Somit wird der Wärmestrom zum Bauteil 16 reduziert und die Temperatur des Bauteils 16 erhöht sich langsamer. Die Thermo-Isolierschicht 20 ist in den unterschiedlichen Bereichen des Bauteils 16 in Abhängigkeit von den Temperaturgradienten, die sich im Betrieb einstellen, unterschiedlich dick ausgebildet.

Eine Phasenumwandlung des Latentwärmespeichers 24 erfolgt ebenfalls bei einer Abkühlung des Bauteils 16 nach dem Abschalten der Dampfturbine 6. Wenn beim Abkühlen die Gefriertemperatur des Latentwärmespeichers 24 erreicht ist, die seiner Schmelztemperatur entspricht, erstarrt er und gibt dabei die ganze eingespeicherte Wärme Q ab. Der Latentwärmespeicher 24 ist dann bereit für das nächste Anfahren der Dampfturbine 6.

Hierbei kann der Latentwärmespeicher 24 sowohl nur ein Speichermedium als auch mehrere Speichermedien umfassen, welche separate Makroelemente 26 im Trägermaterial 22 ausbilden.

In FIG 3 ist eine weitere Ausführungsvariante der Thermo-Isolierschicht 20 gezeigt. Die Thermo-Isolierschicht 20 besteht aus mehreren Kammern 28a, 28b, die mit dem Latentwärmespeicher 24 aufgefüllt sind. Auf der Innenseite 18 des Bauteils 16 sind die Kammern 28a,28b mit einer dünnen Abschirmschicht 30 bedeckt, welche die Wärme Q zum Latentwärmespeicher 24 durchlässt, aber ein Herausfließen des verflüssigten Latentwärmespeichers 24 verhindert. Die einzelnen Kammern 28a,28b sind insbesondere mit unterschiedlichen Speichermedien aufgefüllt, welche Speichermedien bei unterschiedlichen Temperaturen schmelzen.

Eine dritte Ausführungsvariante der Thermo-Isolierschicht 20 ist in FIG 4 gezeigt. Die Thermo-Isolierschicht 20 umfasst zwei Schichten unterschiedlicher Speichermedien 32a, 32b, die unterschiedliche Schmelztemperaturen aufweisen und übereinander angeordnet sind. Die Thermo-Isolierschicht 20 ist hier wieder mit einer Abschirmschicht 30 bedeckt. Die zwei Speichermedien 32a, 32b sind durch eine dünne Trennwand 34 voneinander getrennt, so dass sie sich nicht vermischen, wenn sie beide verflüssigt sind.

Das Speichermedium 32a, welches näher der heißen Seite 18 liegt, weist einen niedrigeren Schmelzpunkt auf. Beim Aufheizen der Seite 18 des Bauteils 16 wird die Wärme Q zuerst in diesem Speichermedium 32a eingespeichert, so lange bis das Speichermedium 32a vollständig in den flüssigen Zustand übergeht. Beim weiteren Aufheizen des Bauteils 16 wird die Schmelztemperatur des zweiten Speichermediums 32b erreicht und es verflüssigt sich ebenfalls. Somit erfolgt eine stufenweise Aufnahme der Wärme Q des Heißdampfes.

Die Wirkung eines Latentwärmespeichers 24 im Vergleich mit einem konventionellen Isolierstoff ist schematisch im Diagramm in FIG 5 dargestellt. In diesem Diagramm ist die Temperatur T in der Turbine 6 beim Anfahren über die in der Thermo-Isolierschicht 20 eingespeicherte Wärmemenge Q aufgetragen.

Die gestrichelte Gerade K stellt die eingespeicherte Wärmemenge Q in Abhängigkeit von der Temperaturerhöhung T beim Anfahren der Turbine 6 mit einem konventionellen Isolierstoff oder ohne Isolierstoff dar. Wie aus der Figur ersichtlich ist, ist die eingespeicherte Wärmemenge Q direkt proportional zur Temperaturerhöhung in der Turbine.

Die eingespeicherte Wärmemenge Q in der Thermo-Isolierschicht 20 des Bauteils 16, wenn es mit einem Latentwärmespeicher 24 isoliert ist, ist durch die punktierte Linie L gegeben. Im ersten Bereich I der Kurve L, bis die Schmelztemperatur Tₛ des Latentwärmespeichers 24 erreicht ist, stimmt der Verlauf der Kurve L mit dem Verlauf der Geraden K überein. Nachdem die Schmelztemperatur Tₛ erreicht ist, die etwa im Bereich zwischen 400°C und 500°C liegt, fängt die Phasenumwandlung des Latentwärmespeichers 24 an, während der die ganze Energie des Heißdampfes eingespeichert wird, ohne dass sich die Temperatur des Latentwärmespeichers 24 bzw. des Bauteils 16 erhöht (Bauteil II der Kurve L). Schließlich, wenn der Latentwärmespeicher 24 vollständig verflüssigt ist, steigt die Temperatur des Bauteils 16 (Bereich III) weiter, wobei die Proportionalität zwischen der Temperatur in der Dampfturbine 6 und der eingespeicherten Wärmemenge Q beibehalten ist. Wie aus dem Diagramm zu entnehmen ist, wird ab Temperaturen über der Schmelztemperatur Tₛ viel mehr Wärme Q im Latentwärmespeicher 24 als im konventionellen Isolierstoff oder in einem Bauteil ohne Isolierstoff eingespeichert. Der Latentwärmespeicher 24 reduziert deutlich den Wärmefluss zum Bauteil 16, so dass eine rapide Erhöhung der Temperatur des Bauteils 16, die zu Spannungen im Material führen würde, verhindert und ein schnelles Anfahren der Dampfturbine 6 ermöglicht ist.

## Patentansprüche

1. Bauteil (16) einer Turbine (6), insbesondere einer Dampfturbine, das im Betrieb der Turbine (6) mit einem Heißmedium beaufschlagt ist und eine Thermo-Isolierschicht (20) aufweist, wobei die Thermo-Isolierschicht (20) einen Latentwärmespeicher (24) zum Speichern von Wärme (Q) durch Änderung seines Aggregatzustandes umfasst.

2. Bauteil (16) nach Anspruch 1,
wobei im Betrieb der Turbine (6) der Latentwärmespeicher (24) im flüssigen Aggregatszustand ist.

3. Bauteil (16) nach Anspruch 2,
wobei die Schmelztemperatur des Latentwärmespeichers (24) im Bereich zwischen 400°C und 500°C liegt.

4. Bauteil (16) nach einem der Ansprüche 1 bis 3,
wobei der Latentwärmespeicher (24) aus mehreren Speichermedien (32a, 32b) besteht, die unterschiedliche Schmelztemperaturen (Tₛ) aufweisen.

5. Bauteil (16) nach einem der Ansprüche 1 bis 4,
wobei die Thermo-Isolierschicht (20) in verschiedenen Bereichen der Turbine (6) unterschiedlich dick ist.

6. Bauteil (16) nach einem der Ansprüche 1 bis 5,
wobei der Latentwärmespeicher (24) mittels einer wärmeleitenden Abschirmschicht (30) gegenüber dem Heißmedium abgeschirmt ist.

7. Bauteil (16) nach einem der Ansprüche 1 bis 6,
wobei der Latentwärmespeicher (24) in Kammern (28a, 28b) eingeschlossen ist.

8. Bauteil (16) nach einem der Ansprüche 1 bis 7,
wobei die Thermo-Isolierschicht (20) ein Trägermaterial (22) umfasst, in dem der Latentwärmespeicher (24) in Form von Makroelementen (26) eingeschlossen ist.

9. Turbine (6), insbesondere eine Dampfturbine, mit mindestens einem Bauteil (16) nach einem der vorhergehenden Ansprüche.

10. Verfahren zum Betrieb einer Turbine (6), insbesondere einer Dampfturbine, bei dem mindestens ein Bauteil (16) der Turbine (6) durch einen Latentwärmespeicher (24) thermisch isoliert wird, mit dessen Hilfe durch eine Änderung seines Aggregatzustandes im Betrieb der Turbine (6) Wärme (Q) gespeichert wird.

11. Verfahren nach Anspruch 10,
bei dem der Latentwärmespeicher (24) im Betrieb der Turbine (6) flüssig wird.

12. Verfahren nach Anspruch 11,
bei dem der Latentwärmespeicher (24) bei einer Temperatur im Bereich zwischen 400°C und 500°C flüssig wird.

13. Verfahren nach einem der Ansprüche 10 bis 12,
bei dem der Latentwärmespeicher (24) aus mehreren Speichermedien (32a, 32b) besteht, deren Aggregatzustand bei unterschiedlichen Temperaturen geändert wird.
